# EUROPEAN PATENT SPECIFICATION

(11) **EP 2 411 973 B1**
(45) Date of publication and mention of the grant of the patent: **07.06.2023**
(21) Application number: 10755318.2
(22) Date of filing: 24.03.2010
(51) Int. Cl.: F21V 8/00, B32B 3/08, B32B 7/05, B32B 7/14, B32B 15/08, B32B 15/18, B32B 21/08, B32B 21/14, B32B 27/08, B32B 27/16, B32B 27/18, B32B 27/30, G02B 6/00, G09F 13/18

(54) **ILLUMINATION PANEL**
BELEUCHTUNGSTAFEL
PANNEAU D'ÉCLAIRAGE

(30) Priority: 25.03.2009 AU 2009901272
(43) Date of publication of application: 01.02.2012
(73) Proprietor: Pixalux Innovations Pty Ltd, Dapto, NSW 2530 (AU)
(72) Inventor: MATYEAR, John, Kiama New South Wales 2533 (AU)
(74) Representative: Branca, Emanuela
(86) International application number: PCT/AU2010/000339
(87) International publication number: WO 2010/108222

(56) References cited:
- WO-A1-92/05535
- JP-A- H1 011 001
- JP-A- 10 011 001
- JP-A- 2002 328 633
- JP-A- 2007 140 142
- US-A- 5 625 968
- US-A1- 2008 037 272
- US-A1- 2008 094 700

## Description

### Introduction

This invention relates to an illumination panel and, in particular, a panel for use in building and display applications including illuminated signage.

### Background of the Invention

Illuminated signage, advertising and display boards are in popular use across the world. These signs usually incorporate discrete lighting which has the effect of illuminating the whole of the sign. There has been a number of past suggestions for using translucent plastics with edge lighting whereby the light is released by a matrix of dots to fully and evenly illuminate the entire surface area of the sign. Well known arrangements of this type of sign utilise an acrylic panel that has printed thereon a graded matrix of ink dots on one or both faces of the panel. The dots of ink affect the refractive and reflective nature of the acrylic and allow light introduced along an edge of the panel to be released across the whole surface area of the panel. When the dots are carried on both sides, the light reflects and refracts more effectively through both surfaces. In one option, a reflective film or sheet is placed on one side causing the light released on that side to be reflected back through the panel so the majority of light leaves the panel only through one ("front") surface. The same process of controlled, even light release can be achieved by laser etching the surface of an acrylic panel.

A problem with lighting systems of the kind described above is that the acrylic panel which carries the matrix of printed dots or laser etching has to be handled very carefully. If the panel becomes scratched or subjected to moisture, light escapes as bright spots thereby upsetting the even light distribution across the surface of the panel.

The vulnerability of the surfaces of the acrylic panel reduces the effective use of such panels and it is consideration of the problems associated with these structures that has brought about the present invention.

US 2008/0094700 discloses a transmissive liquid crystal display panel having arranged at a first face a backlight unit, and at the opposite face a lenticular lens. The backlight unit incorporates a light guide panel, a light scattering sheet and dot structures to allow light to propagate from the light guide panel. JP H10 11001 A, US 2008/037272 A1 and US 5 625 968 A provide similar display panels comprising a matrix of dots.

### Summary of the Invention

According to one aspect of the present invention there is provided an illumination panel according to claim 1.

In the present invention, both surfaces of the core are provided with a matrix of dots that act as adhesive to bond both surfaces to protective panels. The matrix of cots may be applied to the transparent core by etching, painting, screen printing, printing or spraying or any one of a number of application techniques such as transfer from a film or even as part of a film or panel that then becomes the protective layer. Alternatively, the array of dots may be provided by laser etching the surface of the panel to define the array of dots.

Preferably, the core is acrylic and the protective panel may be any suitable material that will bond to the core via the medium of the dots. In one embodiment, a reflective protective panel is attached to one side of the core with a transparent or translucent protective cover being bonded to the other side.

The dots described above can be of any size of shape and are, for example, square, round, linear, rectangular, triangular, doughnut, or any other shape, even an irregular shape. The dots are translucent or opaque and, more preferably, light coloured, for example, white.

### Description of the Drawings

Embodiment of the present invention will now be described by way of example only with reference to the accompanying drawings in which:
Figure 1 is schematic cross sectional view of a single sided illumination panel, not forming part of the invention;
Figure 2 is a schematic cross sectional view of a double sided illumination panel;
Figure 3 is a perspective view of part of a process line for manufacturing the panel of Figure 1, not forming part of the invention;
Figure 4 is a perspective view of the end of the process line;
Figure 5 is a perspective view of a kitchen cabinet incorporating illumination panels of Figure 2;
Figure 6 is a perspective view of an illumination panel of Figure 2; attached to a structural panel
Figure 7 is a perspective view of the interior of a refrigerator lined with panels of the kind illustrated in Figure 2;
Figure 8 is a perspective view of a retail display cabinet using illuminated walls, back panel and shelving incorporating panels shown in Figure 2;
Figure 9 is a perspective view of a street sign incorporating a panel of Figure 2; and
Figure 10 is a perspective view of a solar powered panel for use with a light diffusing panel of Figure 2, not forming part of the invention.

### Description of the Preferred Embodiments

An illumination panel essentially comprises a transparent sheet of clear acrylic plastics with at least one surface covered with a matrix of spaced light refracting and reflecting dots. When light is introduced to the appropriate edges of the panel it is refracted and reflected by the dots to illuminate the whole surface of the panel. Patent Application No. WO92/05535 is an example of this kind of illumination panel.

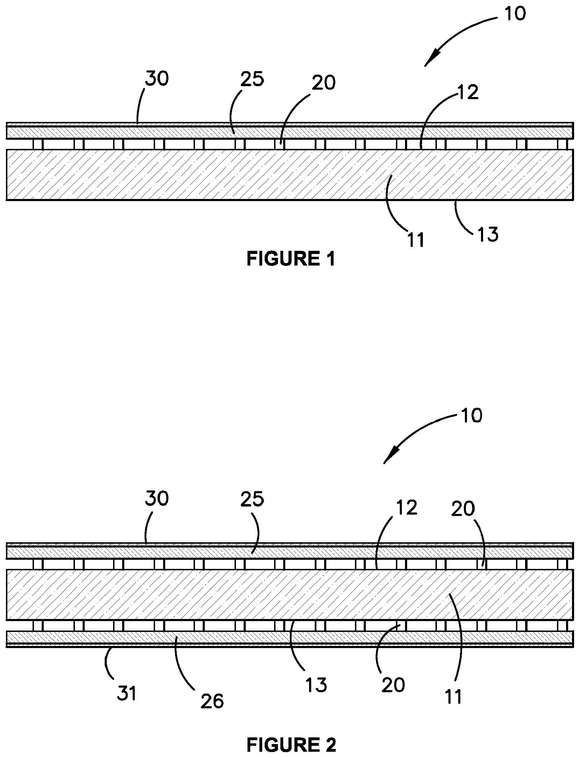

As shown in Figures 1 and 2, an illumination panel 10 in accordance with the embodiments of this invention is shown in both a double sided (Figure 2) configuration and a single sided (Figure 1, not forming part of the invention) configuration.

Each illumination panel 10 comprises a core 11 of transparent acrylic which is usually 6mm, 8mm or 10mm in thickness. The core may include an optical brightener. The core 11 can have any surface sectional area and, although shown planar in Figures 1 and 2, could be appropriately curved. The acrylic core 11 has opposed surfaces 12 and 13, each of which is covered by a matrix of opaque, translucent or clear glue dots 20. The matrix of glue dots 20 acts as an adhesive to secure a protective panel 25, 26 to one or both sides of the core 11.

If required, a layer 30, 31 can be added to the outer side of the protective panels 25, 26. It is understood that the layer 30, 31 may be any material such as glass, timber, metal, paint, ink, photographic film or veneer which could be attached to the protective panel 25, 26 for various purposes, for example painting or veneering a surface to match the surroundings, or printing signs and images. The surfaces of the protective panels 25, 26 may also be left untreated, simply allowing the light to release for general illumination.

In a simpler configuration shown in Figure 1 not forming part of the invention, the core 11 has the matrix of glue dots 20 only on one side 12 and a single protective panel 25 is attached to that side. The important feature of this embodiment is that the matrix of glue dots 20 acts as a light transmitting, refracting and reflecting medium as well as an adhesive, firmly securing the protective panel 25 to the core 11 and protecting the core and dot matrix from damage, for example, by scratching or moisture while also providing a light transmitting surface that can be used without affecting light distribution from the core. The glue is of a light reflecting, refracting or transmitting material and it is understood that there are a large variety of different glues which are suitable.

The matrix of adhesive dots may be applied in many different ways including by etching, painting, printing, screen printing or spraying or transferred from a film or even as part of a film or layer that is then fixed to the core by the adhesive dots. Alternatively, a laser can be used to etch the surface of the core 11 through the protective panel 25 to define the array of dots whilst, at the same time, bonding the protective layer to the core.

The process might also be achieved by laying an appropriate film between the core and protective layer and under laser activation, have the film bond to both surfaces in an array of light transmitting dots.

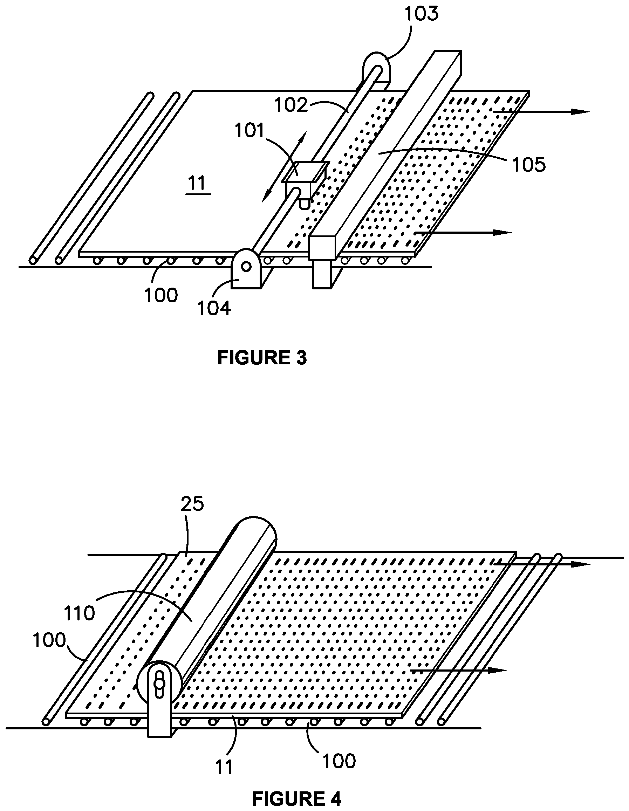

One method of producing the panel shown in Figure 1 is illustrated in Figures 3 and 4. In this embodiment, not forming part of the invention, the core of acrylic plastics 11 is passed along a roller conveyor 100 in the direction of the arrows shown in Figures 3 and 4. An adhesive dispenser 101 is arranged to complete a reciprocal movement along a rod 102 transversely across the conveyor 100. The rod 102 is held by fixed rectangular supports 103, 104. The dispenser 101 places a line of spaced dots of adhesive transversely across one surface of the core and, as the core moves forward, the rows of dots are spaced as shown in Figure 3. Downstream of the dispenser 101 is a UV light 105 which fully or partially cures the adhesive depending on type or process. A protective panel 25 is placed on top of the glued surface and is then consolidated thereon through a pressing roller 110 that rotates to exert downward pressure on the panel 25 to bring the cover panel 25 into abutting contact with the dots on the core 11. It is understood that this process may also be achieved by the adhesive being applied to the protective panel which is then bonded to the cores. In another method, the adhesive may be printed to the core or protective panel and the two components then pressed together and the adhesive cured by light.

The dot matrix substantially covers the surface of the core 11 and operates to control the release of light introduced along one or more sides of the panel 10. It is usual for the density or size of dots, or both to increase along the panel 10 in a direction away from the edge where the light is introduced for a single light source, and when light is introduced from opposite sides of the core panel, the density or size of dots or both increases to a point equal distance from both light sources. To achieve an even light distribution across the core panel, the density of dots can be increased or alternatively, the gaps between the dots can remain constant and the size of the dots increased, or both the density and size of the dots increased.

The dots may comprise a grid work of lines or even concentric circles of differing diameters. The adhesive dots may be any one of a number of adhesive materials including various formulations of UV curing inks and adhesives, and adhesive of clear or white silicon.

Both panels 10 described above are in themselves structural units and thus can be supported or used as wall panels, shelves or in a wide variety of structural environments. The panels are not enclosed within a supporting frame and can, by themselves, operate as structural elements. In one embodiment, it is envisaged that at least one edge of the panel would have LEDs embedded therein which would operate on low voltage to define a highly illuminated structural element. The LEDs could also be simply attached to one or more edges of the panel by a metal or plastic extrusion, or clips. The advantage of embedding LED lighting into the panel means that, as a structural unit, it is complete. Since LEDs have a long lifespan the panels could be left illuminated for very lengthy periods operating on a low safe voltage without the need of maintenance. The light delivered could be white or any number of different colours available from LED lighting elements.

In another embodiment, the protective panel 25 could be either light transmitting or a reflective panel. The protective panel could be a suitable material such as plastics, glass, laminex, metal or timber. The surface of the panel 25 that is to be bonded to the core could be painted or treated to define a reflective surface when the panel operates as a reflector. For example, a white polystyrene or polyethylene panel may be bonded directly to the core 11 with the surface of the plastics reflecting the light released from the core by the glue dots. The opposite side of the core could be left untouched and the assembly may be placed behind, under or above a glass sheet without being attached. This arrangement could be used for a kitchen splashback or a glass shelf. Alternatively, the opposite side of the core could have an opal translucent panel bonded by a matrix of adhesive dots, and used as a single sided sign.

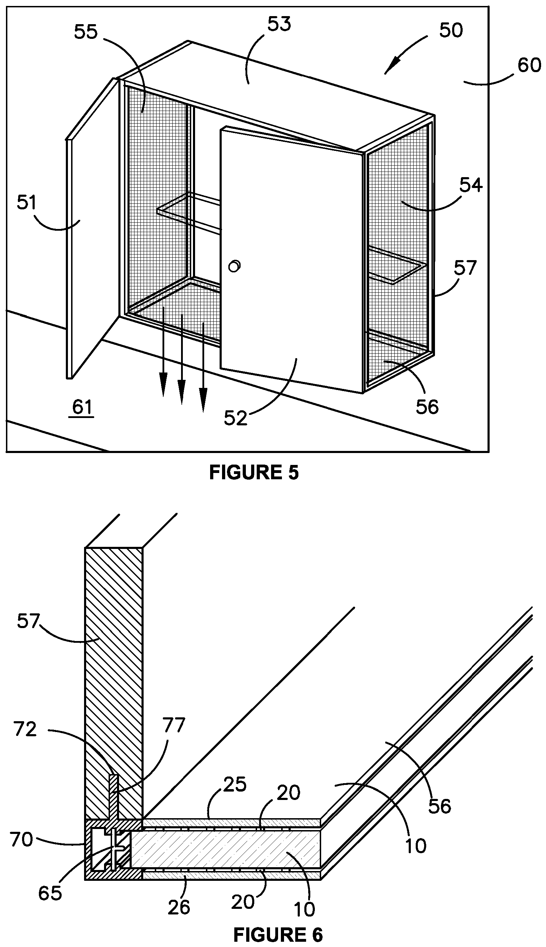

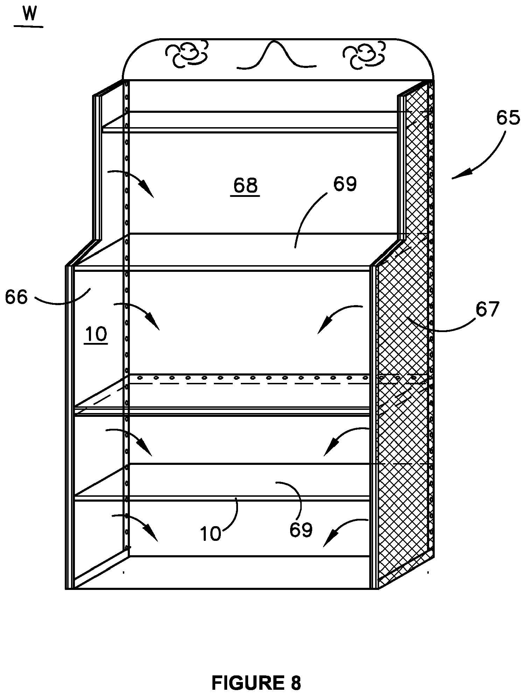

In a further example, a laminex veneer may be bonded directly to the core 11 with the inside (or bonding) surface of the veneer having been painted white to reflect light. The veneer then provides the finished external surface while the internal face of the veneer acts to reflect light back through the core and out the opposite surface. This front light releasing surface of the core can be protected by a clear or opal translucent material that is attached by another light releasing matrix of glue dots. This could be the case when the illumination panel is used as the walls and/or base of a cupboard, or a retail display, see Figures 5 and 8.

A rectangular kitchen cupboard 50 is shown in Figures 5 and 6, comprising hinged doors 51, 52, a top 53, sides 54, 55, base 56 and rear panel 57. The rear panel 57, top 53 and doors 51, 52 are manufactured of conventional joinery such as laminex, plywood, timber, chip board etc. The base 56 and sides panels 54, 55 are constructed of illuminated panels 10 shown in greater detail in Figure 6. In Figure 5, the cupboard is mounted against a wall 60 above a bench surface 61. Since the side panels and base panels are illuminated panels, light is passed into the interior of the cupboard by the side panels and down onto the bench surface 61 by the base panel 56.

As shown in Figure 6, each panel 10 comprises an acrylic core 11 with a matrix of dots 20 on either side. The matrix of glue dots secures a reflective cover 25 on one side and a translucent layer 26 on the other side. The edge of the panel has attached thereto an elongated light strip 65 and the light strip, together with the panel, is located within a rectangular aluminium extrusion 70. The extrusion 70 has an upstanding web 77 which is keyed into a slot 72 in the panel 57 which constitutes the timber, veneer or laminex structural rear panel 57 of the cabinet 50. The side panels may transmit light either internally into the cabinet or on both sides and the base panel is designed primarily to transmit light to the underside. A single or dual light source is located along the rear and or front edges and a reflective covering is placed on the top side. Where the light travels in both directions it is understood that translucent panels would be used on both sides.

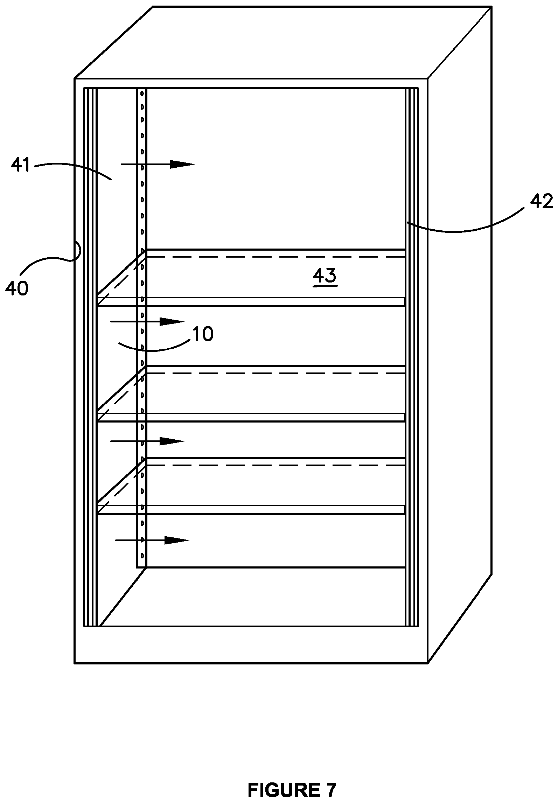

In Figure 7, there is an illustration of an embodiment where illuminated panels 10 are incorporated as the walls of a refrigerator 40. The panels have at least one edge lined with LEDs. The core 11 is bonded to a reflecting panel or the wall of the refrigerator so that each side wall 41, 42 and rear panel 43 constitutes a light source. A translucent acrylic panel is bonded to the core to provide the hard wearing exterior surface within the interior of the refrigerator. A door operated switch (not shown) can be used to control operation of the lights. In both embodiments shown in Figures 5 to 7, it is understood that the shelves could incorporate illumination panels of the kind described above.

In Figure 8, there is an illustration of a retail display 65 in which the side walls 66, 67, back panel 68 or shelving 69 could be manufactured of illuminating panels 10 of the kind described above. As described in earlier embodiments, a line of LEDs is secured along the edges of the side walls and rear wall and along one or more edges of the shelves and the core is covered on both sides by acrylic or glass panels to provide hard wearing surfaces that can be used as shelving in retail displays, or carry images and branding information.

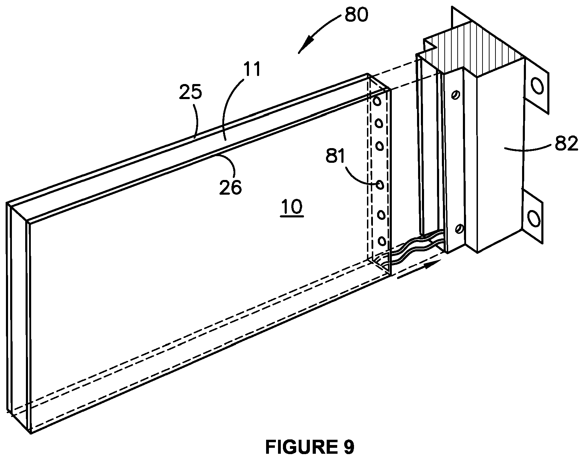

In Figure 9, there is an illustration of a street sign 80 comprising an elongate rectangular panel 10 incorporating a core 11 and front and rear translucent acrylic faces 25, 26. The longitudinal and side edges of the panel are sealed and LED elements 81 are positioned along the inner edge. The whole assembly is housed in an aluminium extrusion 82 which forms a housing which in turn contains a battery or transformer to power it as an illuminated street sign. The printing can be carried on either acrylic face.

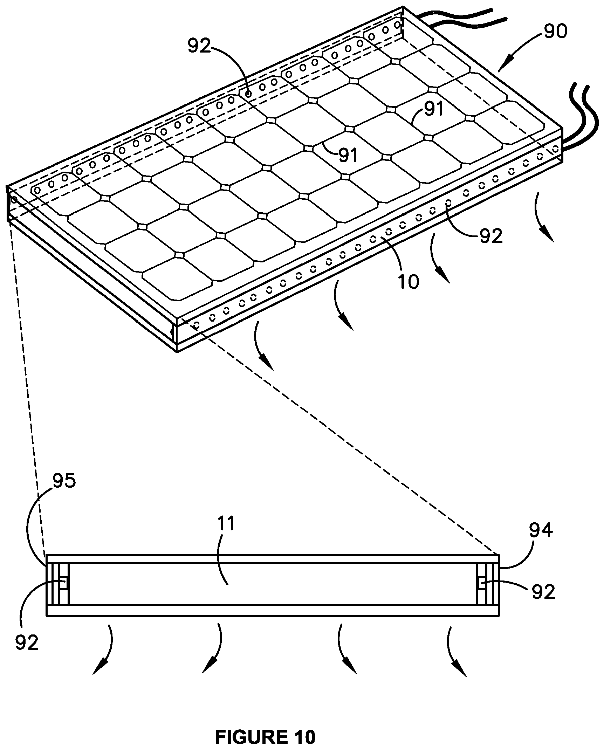

In the embodiment, not forming part of the invention, shown in Figure 10, a solar panel 90 incorporates an illuminated panel 10 of the kind described above whereby solar panels in the form of photo voltaic cells with a reflective under surface are bonded to the exterior of the panel 10 on the top surface and they are coupled to either battery storage or battery packs which in turn power LEDs 92 positioned down the side edges of the panel. The edges of the panel can be protected with an acrylic or metal edging strip 94, 95 and, in this manner, the panel absorbs the sun during the day which can be stored as electricity in a battery pack ensuring that the panel is illuminated at night. In this panel, a translucent diffuser is bonded to the core 11 to define the underside of the panel and the upper side of the panel has a reflective surface that is part of or which supports the solar panels 91.

In another embodiment, the core could comprise a series of thin panels each with appropriate positioning of adhesive dots which are in alignment or offset from the adhesive dots on the adjacent panel. In this way a laminated structure is produced with an added dimension of dot matrix refinement; in the direction horizontally away from the light source the dots may get bigger on each layer and then vertically in the direction of the light being released the dots may get proportionally smaller. Seen from the light releasing face, the dots may appear to cover the surface, but in fact they may be positioned on each layer in different positions.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. An illumination panel (10) comprising a transparent core (11) having two opposing surfaces (12, 13), a matrix of light releasing and distributing glue dots (20) substantially covering both said opposing surfaces (12, 13), wherein the density and/or the size of the dots increases across the panel in a direction away from a panel edge arranged to receive light introduced from a light source, and a protective layer (25, 26) in abutting contact with each of said opposing surfaces (12, 13) whereby the glue dots (20) are translucent or opaque so that the matrix of glue dots acts as a light transmitting, refracting and reflecting medium for controlling a release of light introduced along one or more sides of the illumination panel (10), the matrix of glue dots (20) also acting as an adhesive bonding the core (11) to each protective layer (25, 26) and wherein the illumination panel (10) is not enclosed within a supporting frame and itself operates as a structural element.

2. The illumination panel (10) according to claim 1, wherein an outer layer (30, 31) is bonded to each protective layer (25, 26).

3. The illumination panel (10) according to claim 2, wherein the outer layer (30, 31) is paint, ink, a transfer, steel, glass, plastics, wood or wood veneer.

4. The illumination panel (10) according to any one of the preceding claims, wherein the transparent core (11) is acrylic.

5. The illumination panel (10) according to any one of the preceding claims, wherein the matrix of dots (20) is applied to the transparent core (11) by etching, painting, screen printing, printing or spraying, or transferred from or as part of a film.

6. The illumination panel (10) according to any one of claims 1 to 5 wherein the matrix of dots (20) is provided by a method chosen from laser etching the surface of the core (11) through the protective layer (25, 26); or induction, dielectric or microwave activation of a distributed receptor that bonds each surface of the core (10) to each respective protective layer (25, 26).

7. The illumination panel (10) according to any one of claims 1 to 5, wherein the matrix of dots (20) is cured by UV light or infra-red heating to bond the surface of the core (10) to the protective layer (25, 26).

8. The illumination panel (10) according to any one of the preceding claims, wherein a light source is positioned adjacent or on one edge of the panel.

9. The illumination panel (10) according to claim 8, wherein the light comprises a plurality of LEDs secured to or imbedded in one or more edges of the panel.

10. The illumination panel (10) according to claim 1, wherein the matrix of glue dots is white silicon.

11. A cabinet having walls and shelves, some of the walls comprising illumination panels according to claim 1 with a light source attached to an edge of each panel.

12. A street sign comprising a panel according to claim 9 and housed in a housing, the housing containing a battery or transformer to power the illumination of the street sign.

## Patentansprüche

1. Beleuchtungstafel (10) mit einem transparenten Kern (11), der zwei gegenüberliegende Oberflächen (12, 13) aufweist, einer Matrix von Licht freisetzenden und verteilenden Klebepunkten (20), die beide gegenüberliegenden Oberflächen (12, 13) im Wesentlichen bedecken, wobei die Dichte und/oder die Größe der Punkte über die Tafel in einer Richtung weg von einem Tafelrand zunimmt, die so eingerichtet ist, dass sie von einer Lichtquelle eingeführtes Licht empfängt, und einer Schutzschicht (25, 26) in anliegendem Kontakt mit jeder der gegenüberliegenden Oberflächen (12, 13), wobei die Klebepunkte (20) lichtdurchlässig oder lichtundurchlässig sind, so dass die Matrix aus Klebepunkten als ein lichtübertragendes brechendes und reflektierendes Medium zum Steuern einer Freisetzung von Licht wirkt, das entlang einer oder mehrerer Seiten der Beleuchtungstafel (10) eingeführt wird, wobei die Matrix aus Klebepunkten (20) auch als ein Klebstoff wirkt, der den Kern (11) mit jeder Schutzschicht (25, 26) bindet, und wobei die Beleuchtungstafel (10) nicht innerhalb eines Stützrahmens eingeschlossen ist und selbst als ein Strukturelement wirkt.

2. Beleuchtungstafel (10) nach Anspruch 1, wobei eine äußere Schicht (30, 31) mit jeder Schutzschicht (25, 26) gebunden ist.

3. Beleuchtungstafel (10) nach Anspruch 2, wobei die äußere Schicht (30, 31) aus Farbe, Tinte, einem Transfer, Stahl, Glas, Kunststoff, Holz oder Holzfurnier besteht.

4. Beleuchtungstafel (10) nach einem der vorhergehenden Ansprüche, wobei der transparente Kern (11) aus Acryl besteht.

5. Beleuchtungstafel (10) nach einem der vorhergehenden Ansprüche, wobei die Matrix aus Punkten (20) auf den transparenten Kern (11) durch Ätzen, Malen, Siebdruck, Drucken oder Sprühen aufgebracht wird oder von einem Film oder als Teil eines Films übertragen wird.

6. Beleuchtungstafel (10) nach einem der Ansprüche 1 bis 5, wobei die Matrix aus Punkten (20) durch ein Verfahren bereitgestellt wird, das ausgewählt wird aus Laserätzen der Oberfläche des Kerns (11) durch die Schutzschicht (25, 26) hindurch; oder Induktion, dielektrische oder Mikrowellenaktivierung eines verteilten Rezeptors, der jede Oberfläche des Kerns (10) mit jeder entsprechenden Schutzschicht (25, 26) bindet.

7. Beleuchtungstafel (10) nach einem der Ansprüche 1 bis 5, wobei die Matrix aus Punkten (20) durch UV-Licht oder Infraroterwärmung ausgehärtet wird, um die Oberfläche des Kerns (10) mit der Schutzschicht (25, 26) zu binden.

8. Beleuchtungstafel (10) nach einem der vorhergehenden Ansprüche, wobei eine Lichtquelle neben oder an einer Kante der Platte angeordnet ist.

9. Beleuchtungstafel (10) nach Anspruch 8, wobei das Licht eine Vielzahl von LEDs umfasst, die an einem oder mehreren Rändern der Tafel befestigt oder darin eingebettet sind.

10. Beleuchtungstafel (10) nach Anspruch 1, wobei die Matrix aus Klebepunkten aus weißem Silizium besteht.

11. Schrank mit Wänden und Regalen, wobei einige der Wände Beleuchtungstafeln nach Anspruch 1 mit einer an einem Rand jeder Tafel angebrachten Lichtquelle umfassen.

12. Straßenschild, das eine Tafel nach Anspruch 9 umfasst und in einem Gehäuse untergebracht ist, wobei das Gehäuse eine Batterie oder einen Transformator enthält, um die Beleuchtung des Straßenschildes zu betreiben.

## Revendications

1. Panneau d'éclairage (10) comprenant un noyau transparent (11) ayant deux surfaces opposées (12, 13), une matrice de points de colle (20) libérant et distribuant la lumière, recouvrant sensiblement les deux dites surfaces opposées (12, 13), dans laquelle la densité et/ou la taille des points augmente en travers du panneau dans une direction s'éloignant d'un bord du panneau agencé pour recevoir la lumière introduite à partir d'une source lumineuse, et une couche protectrice (25, 26) en contact de butée avec chacune desdites surfaces opposées (12, 13), les points de colle (20) étant translucides ou opaques de sorte que la matrice de points de colle agit comme un émetteur de lumière, réfractant et réfléchissant la lumière pour contrôler une libération de lumière introduite le long d'un ou plusieurs côtés du panneau d'éclairage (10), la matrice de points de colle (20) agissant également comme un adhésif liant le noyau (11) à chaque couche protectrice (25, 26) et dans lequel le panneau d'éclairage (10) n'est pas enfermé dans un cadre de support et fonctionne lui-même comme un élément structurel.

2. Panneau d'éclairage (10) selon la revendication 1, dans lequel une couche extérieure (30, 31) est liée à chaque couche protectrice (25, 26).

3. Panneau d'éclairage (10) selon la revendication 2, dans lequel la couche extérieure (30, 31) est de la peinture, de l'encre, un transfert, de l'acier, du verre, du plastique, du bois ou un placage de bois.

4. Panneau d'éclairage (10) selon l'une quelconque des revendications précédentes, dans lequel le noyau transparent (11) est de l'acrylique.

5. Panneau d'éclairage (10) selon l'une quelconque des revendications précédentes, dans lequel la matrice de points (20) est appliquée sur le noyau transparent (11) par gravure, peinture, sérigraphie, impression ou pulvérisation, ou transférée à partir de ou en tant que partie d'un film.

6. Panneau d'éclairage (10) selon l'une quelconque des revendications 1 à 5, dans lequel la matrice de points (20) est fournie par un procédé choisi parmi la gravure au laser de la surface du noyau (11) à travers la couche protectrice (25, 26) ; ou l'activation par induction, diélectrique ou micro-ondes d'un récepteur distribué qui lie chaque surface du noyau (10) à chaque couche protectrice respective (25, 26).

7. Panneau d'éclairage (10) selon l'une quelconque des revendications 1 à 5, dans lequel la matrice de points (20) est durcie par une lumière UV ou un chauffage infrarouge pour lier la surface du noyau (10) à la couche protectrice (25, 26).

8. Panneau d'éclairage (10) selon l'une quelconque des revendications précédentes, dans lequel une source lumineuse est positionnée de manière adjacente ou sur un bord du panneau.

9. Panneau d'éclairage (10) selon la revendication 8, dans lequel la lumière comprend une pluralité de LED fixées ou encastrées dans un ou plusieurs bords du panneau.

10. Panneau d'éclairage (10) selon la revendication 1, dans lequel la matrice de points de colle est en silicium blanc.

11. Armoire ayant des parois et des étagères, certaines des parois comprenant des panneaux d'éclairage selon la revendication 1 avec une source lumineuse fixée à un bord de chaque panneau.

12. Panneau de signalisation comprenant un panneau selon la revendication 9 et logé dans un boîtier, le boîtier contenant une batterie ou un transformateur pour alimenter l'éclairage du panneau de signalisation.
